# EUROPEAN PATENT APPLICATION

(11) **EP 4 693 214 A1**
(43) Date of publication of application: **11.02.2026**
(21) Application number: 25187208.1
(22) Date of filing: 03.07.2025
(51) Int. Cl.: G06V 10/25, G06V 10/75, G06V 10/764, G06V 10/774, G06V 20/52, G06V 10/778

(54) **FRAUD DETECTION PROGRAM, INFORMATION PROCESSING APPARATUS AND SYSTEM**

(30) Priority: 05.08.2024 JP 2024128871
(71) Applicant: FUJITSU LIMITED, Kawasaki-shi, Kanagawa 211-8588 (JP)
(72) Inventor: ISHIDA, Ryo, Kawasaki-shi, Kanagawa, 211-8588 (JP)
(74) Representative: Hoffmann Eitle

(57) **Abstract**

A fraud detection program causing a computer to execute a process including obtaining an object detection result by inputting a target image group including a self-checkout apparatus in an imaging range, into a model trained using a target image and an annotation, and performing fraud detection at the self-checkout apparatus based on information about an item registered thereto and the object detection result. The target image is identified by calculating statistical information of a position of a detection region of an object in each image in a first group based on positions by inputting the first group into the model, obtaining a position in each image in a second group using the model, and identifying the target image in which a region having an appearance probability equal to or less than a threshold is present, from the second group, based on the statistical information.

## Description

### [Technical Field]

The present disclosure relates to a fraud detection program, an information processing apparatus, and an information processing system.

### [Background Art]

There are known services that use object detection models to detect fraud at self-checkout registers, such as when merchandise items are not scanned, for example.

The object detection model is trained to detect merchandise items (objects) based on images that include the items scanned by a self-checkout register in the scanning region.

### [Citation List]

### [Patent Document]

[Patent Document 1] US Patent Application Publication No. 2022/0188695
[Patent Document 2] Japanese Laid-open Patent Publication No. 2024-066084
[Patent Document 3] Japanese Laid-open Patent Publication No. 2022-150553
[Patent Document 4] US Patent Application Publication No. 2018/0349725

### [Summary Of The Invention]

### [Problems To Be Solved By The Invention]

For example, during an inference process by the object detection model using images captured in an environment different from the self-checkout environment used in the training, unexpected behaviors that are difficult to anticipate in advance may occur. Such behaviors include erroneous detections, such as an over-detection where non-existent objects are detected and an under-detection where existing objects fail to be detected, for example.

To reduce the likelihood of such behaviors, one possible approach is to retrain (perform a machine learning process on) the object detection model by adding, to the training data, images that trigger these behaviors in each specific environment where a self-checkout register is installed, collected from the environment.

However, whether or not the object detection model can identify images (target images) that trigger such behaviors may depend on the skill of the operator. Moreover, manually reviewing a large number of images (e.g., long video footage) to add the target images to the training data is impractical in terms of the costs, such as labor time and personnel expense.

It is an object in one aspect of the embodiment to enabling easy identification of target images to be added to training data for an object detection model.

### [Means To Solve The Problem]

According to an aspect of the embodiment, a fraud detection program that causes a computer to execute a process including: obtaining an object detection result obtained by inputting a detection target image group including a self-checkout apparatus in an imaging range, into an object detection model trained using training data, the training data including a target image and an annotation indicating an object included in the target image, the target image being identified by an identifying process including calculating statistical information of a position of a detection region of an object in each image in a first image group based on positions of detection regions obtained by inputting the first image group into an object detection model; obtaining a position of a detection region of the object in each image in a second image group by inputting the second image group into the object detection model; and identifying a target image in which a detection region having an appearance probability equal to or less than a threshold is present, from a plurality of images included in the second image group, based on the statistical information, the target image being to be added to training data used for training the object detection model, and performing fraud detection at the self-checkout apparatus based on information about an item registered to the self-checkout apparatus and the object detection result.

### [Effect Of The Invention]

In one aspect, target images to be added to training data used for training an object detection model can be easily identified.

### [Brief Description Of Drawings]

FIG. 1 is a diagram for describing one example of a fraud detection process using an object detection model by a fraud detection system;
FIG. 2 is a diagram illustrating examples of irregular behaviors of the fraud detection system;
FIG. 3 is a diagram illustrating an example of the identification of target images using temporal consistency;
FIG. 4 is a diagram illustrating one example of a continuous over-detection;
FIG. 5 is a block diagram illustrating an example of the configuration of a system according to one embodiment;
FIG. 6 is a block diagram illustrating an example of the configuration of a system according to one embodiment;
FIG. 7 is a diagram illustrating examples of an identification of an over-detection using spatial consistency;
FIG. 8 is a block diagram illustrating an example of the hardware configuration of a computer according to one embodiment;
FIG. 9 is a block diagram illustrating an example of the functional configuration of a system according to a first example;
FIG. 10 is a diagram illustrating an example of the calculation of statistical information;
FIG. 11 is a diagram illustrating an example of the identification of an over-detection;
FIG. 12 is a flowchart illustrating an example of the operation of an image identification process;
FIG. 13 is a flowchart illustrating an example of the operation of a training data generation process;
FIG. 14 is a flowchart illustrating an example of the operation of a machine learning process;
FIG. 15 is a flowchart illustrating an example of the operation of a fraud detection process;
FIG. 16 is a diagram illustrating one example of image consistency;
FIG. 17 is a diagram illustrating an example of the identification of an over-detection and under-detection using image consistency;
FIG. 18 is a block diagram illustrating an example of the functional configuration of a server according to a second example;
FIG. 19 is a diagram illustrating one example of a method for calculating scores; and
FIG. 20 is a flowchart illustrating an example of the operation of an image identification process.

### [Description Of Embodiments]

Hereinafter, an embodiment of the present disclosure will be described with reference to the drawings. However, the embodiment described below is merely exemplary, and it is not intended to exclude various modifications or applications of the techniques not explicitly described in the following. For example, the present embodiment can be practiced in various modifications without departing from the scope thereof. In the drawings used in the following description, elements denoted by like reference symbols denote the same or similar elements, unless otherwise stated.

### (A) Behavior of Object Detection Model According to Environments of Self-Checkout Register

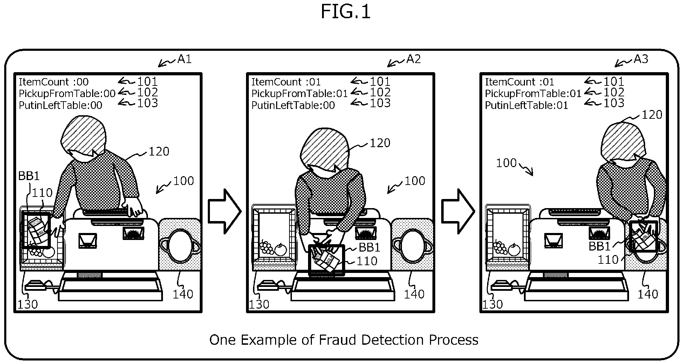

FIG. 1 is a diagram for describing one example of a fraud detection process using an object detection model by a fraud detection system. The fraud detection system detects fraud based on the detection of a merchandise item (item) 110 by an object detection model using images captured by a camera and the result of registration (e.g., scanning) of the item 110 to a Point Of Sales (POS) device such as a self-checkout register 100. The self-checkout register 100 is installed, for example, in a store of a retailer or the like.

As denoted by the reference symbols A1 and A2 in FIG. 1, when the fraud detection system detects that a customer (shopper) 120 has picked up the item 110 from a basket on a table 130 of the self-checkout register 100 and the item 110 has been registered to the POS device, the fraud detection system updates the number of items. For example, the fraud detection system increments the values of both the number of items 101 registered to the POS device "ItemCount" and the number of items 102 picked up by the customer 120 from the table "PickupFromTable" by 1.

As denoted by the reference symbol A3 in FIG. 1, when detecting that the customer 120 has placed the item 110 into a bag attached to a table 140 of the self-checkout register 100, the fraud detection system increments the value of the number of items 103 put into the bag "PutinLeftTable" by 1.

The fraud detection system performs the process of the reference symbols A1 to A3 for each item 110 picked up by the customer 120, and, when a mismatch is detected between either or both of the numbers of items 101 and 102, and the number of items 103, outputs an alert.

As illustrated in FIG. 1, the object detection model marks item 110 detected in the image with a bounding box (BBOX; hereinafter sometimes referred to as "BBOX" or "BB") indicating the region in which the item 110 is present in the image. The BBOX (denoted as BB1 in FIG. 1) is one example of a detection region of an object and may include information about the size and location (e.g., coordinates) of the region in which the item 110 is present. In the drawings, BBOXes are illustrated as thick solid frames or double-line frames.

The object detection model is trained using training data that includes images captured in an environment X (training data for the environment X), such as the environment illustrated in FIG. 1, for example. When the fraud detection process is performed in an environment Y different from the environment X using the object detection model trained with the training data, the fraud detection system may exhibit a behavior that is difficult to anticipate in advance (irregular behavior or incorrect action). Such behavior includes, for example, erroneous detections such as an over-detection and under-detection.

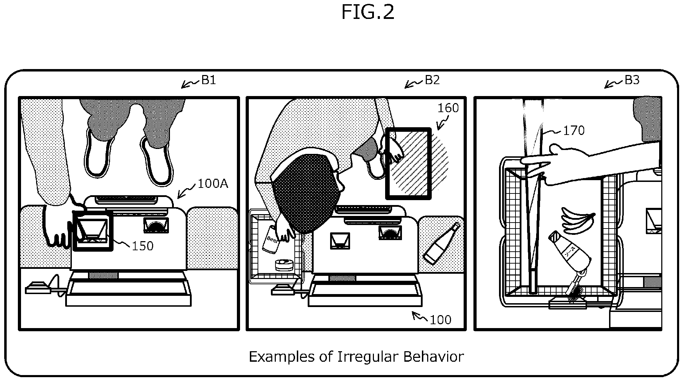

FIG. 2 is a diagram illustrating examples of irregular behaviors of the fraud detection system. The reference symbol B1 in FIG. 2 denotes one example of an object detection result when an image captured in the environment Y includes a self-checkout register 100A. The self-checkout register 100A includes a coin insertion slot 150 that is different from the coin insertion slot of the self-checkout register 100 installed in the environment X, in terms of at least one of shape, position, or decoration. In this case, the object detection model may over-detect the coin insertion slot 150 as an object (item), as indicated by the corresponding BBOX.

The reference symbol B2 in FIG. 2 denotes one example of an object detection result when a floor surface (floor) 160 included in an image captured in the environment Y reflects light, such as light from lighting or sunlight. In this case, the object detection model may over-detect the floor surface 160 as an object (item), as indicated by the BBOX.

The reference symbol B3 in FIG. 2 denotes one example of an object detection result when an image captured in the environment Y includes an item 170. The item 170 is an item that is not present in the environment X, and is, for example, an umbrella. The appearance of the item 170 is not included in the images in the training data, and has a shape that is not similar to any items in the images included in the training data (unusual shape), for example. In this case, the object detection model may not detect the item 170 as an object (item) (i.e., may result in an under-detection).

To reduce the possibility of the occurrence of such behaviors, it is conceivable to add, to the training data, target images (see the reference symbols B1 to B3 in FIG. 2) that trigger irregular behaviors in the environment Y where the self-checkout register 100 is installed, and train (retrain) the object detection model.

However, it is difficult to anticipate in advance in what kind of scene in the environment Y the fraud detection system may exhibit irregular behaviors. Therefore, whether target images that may trigger irregular behaviors can be identified or not may depend on the skill of the operator.

In addition, in order to add the target images to the training data, manually inspecting a huge number of images (long video data) in the environment Y may result in excessive costs, such as labor time and personnel expense. For example, a 1,000-hour video footage contains 3,600,000 images if the frame rate is 1 Frame Per Second (FPS). Extracting 1,000 target images manually from this video footage, for example, is not realistic from a cost perspective.

For example, it is assumed to extract a plurality of target images to be added to the training data for retraining the object detection model trained using a video footage captured in the environment X, from a video footage captured in the environment Y by a computer. Hereinafter, the video footage captured in the environment X may be referred to as "video X", and the video footage captured in the environment Y may be referred to as "video Y".

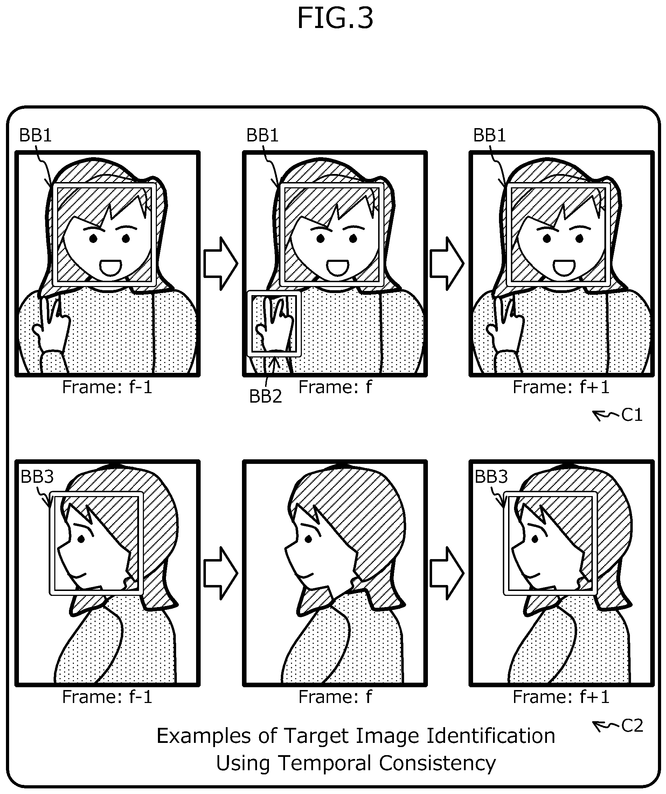

FIG. 3 is a diagram illustrating an example of the identification of target images using temporal consistency. Temporal consistency refers to the property that if the output from the object detection model (object detector) is stable, in other words, reliable, similar outputs are obtained for consecutive frames.

For example, a computer performs detection using the object detection model for a plurality of consecutive frames in the video Y. If there is a frame of which detection result does not match the preceding and succeeding frames, the computer determines that the detection result is an over-detection or under-detection and identifies the frame as a target image.

In the example denoted by the reference symbol C1 in FIG. 3, a BB1 representing a face is detected in the frames f-1 and f+1, while the BB1 and a BB2 are detected in the frame f, among the consecutive frames f-1, f, and f+1 in the video Y. In this case, the computer determines that the BB2 is an over-detection and identifies the frame f as a target image.

In the example denoted by the reference symbol C2 in FIG. 3, a BB3 representing a face is detected in the frames f-1 and f+1, while no BBOX is detected in the frame f, among the consecutive frames f-1, f, and f+1 in the video Y. In this case, the computer determines that the BB3 is an under-detection in the frame f and identifies the frame f as a target image.

However, for example, if an over-detection occurs (temporally continuously) across a plurality of consecutive frames, the computer may have difficulty in making a determination on these over-detections (hereinafter, sometimes referred to as "continuous over-detections") due to the nature of temporal consistency.

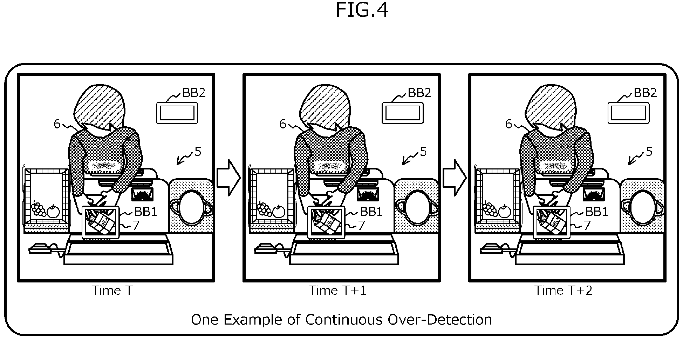

FIG. 4 is a diagram illustrating one example of a continuous over-detection. FIG. 4 illustrates an example in which continuous over-detections of a BB2 occur across consecutive frames at times T, T+1, and T+2. In FIG. 4, an object (region) different from an item 7 that the customer 6 is registering to the POS device 5 is detected (over-detected) as the BB2 on the floor surface behind the customer 6. Since this object is detected continuously over the times T, T+1, and T+2, it is consistent in terms of temporal consistency (i.e., it does not appear unnatural). Therefore, it is difficult for the computer to determine from the images at the times T, T+1, and T+2 that the BBOX of the BB2 is an over-detection. The over-detection of the BB2 can be identified if the operator preparing the training data visually inspects the images, but as described above, it is not realistic from a cost perspective, such as labor time.

Accordingly, in one embodiment, a method for enabling easy identification of target images to be added to training data used for training an object detection model will be described. Additionally, in another aspect, in one embodiment, a method for enabling easy generation of training data for the object detection model will be described. Furthermore, in a further aspect, in one embodiment, a method for performing fraud detection by using the object detection model trained with the training data will be described.

### (B) One Embodiment

### (B-1) Example of Configuration of System

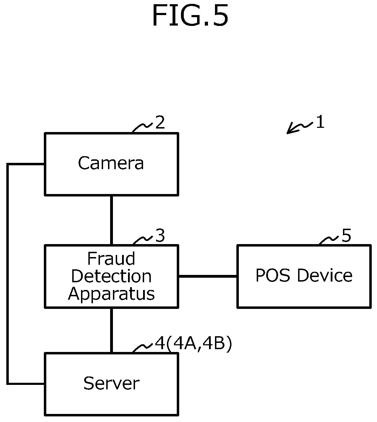

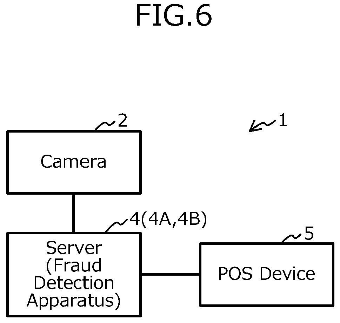

FIG. 5 and FIG. 6 are block diagrams illustrating an example of the configuration of a system 1 according to one embodiment. The system 1 is one example of an information processing system or fraud detection system and may be applied to a system including a self-checkout register installed in a store, such as a retailer, for example.

As illustrated in FIG. 5, the system 1 may include, as an example, one or more cameras 2, one or more fraud detection apparatuses 3, one or more servers 4, and one or more POS devices 5.

Each POS device 5 is one example of an information processing apparatus or computer, and is a self-checkout apparatus that enables registration of items by a customer, e.g., a self-checkout register. Registration of items may include scanning an item label or selecting an item on the screen of the POS device 5. The POS device 5 may output, as event information, information indicating the number of items registered by the customer, to the fraud detection apparatus 3. the POS device 5 also may include various functions for performing a settlement process (payment, checkout) of items by the customer, in addition to registration of items.

The POS device 5 may be included in a POS system that manages POS information from a plurality of POS devices 5, from a plurality of stores, etc., and may be communicatively connected to other devices in the POS system via a network (not illustrated), for example. In this case, the POS device 5 may output various information, such as POS information and payment information, to the POS system. The POS information may include, for example, information that uniquely identifies an item registered by the customer. Examples of information that uniquely identifies an item include various identifiers such as item name, item code, and a code on the POS system. The event information may include, for example, POS information.

Each camera 2 may be various imaging devices installed in the store with an angle of view that overlooks the POS device 5, for example. The camera 2 may be installed in the vicinity of the POS device 5, as one example, on the ceiling above the POS device 5, but is not limited thereto and may be installed at various positions capable of ensuring the imaging range to be described later.

A footage (video) captured by the camera 2 may include a plurality of captured images (a plurality of frames) including at least the POS device 5 and the appearance of an item, e.g., an item that the customer is registering on the POS device 5, within the imaging range. The captured images may include the customer. The video captured by the camera 2 may be output to the fraud detection apparatus 3 and the server 4.

The camera 2 may be fixedly installed in the store so that the imaging range, e.g., the angle of view and the resolution, remains constant across the plurality of frames of the video. Alternatively, if the camera 2 has an angle of view and resolution that allows cropping of a certain image region including at least the POS device 5 and the appearance of an item across a plurality of frames, the camera 2 may be installed in the store so that the imaging range changes over time.

Furthermore, one camera 2 may be installed to capture a plurality of POS device 5. In this case, the camera 2 only needs to have an angle of view (e.g., wide angle) and resolution that allow cropping of a plurality of certain image regions, each including at least the POS device 5 and the appearance of an item in each frame, across a plurality of frames.

The fraud detection apparatus 3 is one example of an information processing apparatus or computer, and performs a fraud detection process to detect fraudulent acts based on camera images obtained from the camera 2 and event information obtained from the POS device 5. Examples of the frauds to be detected by the fraud detection apparatus 3 may include, for example, not only fraudulent acts such as the illicit obtainment of an item, but also failures in registering an item to the POS system (e.g., the POS terminal 5) due to customer mistakes such as operational errors, forgetfulness, or misunderstandings.

The fraud detection process may be achieved using an object detection model (machine learning model) trained by techniques such as Deep Learning (DL), for example. The fraud detection apparatus 3 may be a computer, such as an edge terminal installed in the vicinity or inside of the POS device 5, or may be a computer, such as a server installed in the back office of the store, at a remote location, or the like, via a network. Examples of remote locations include other stores, the headquarters or branch offices of the retailer, data centers, etc., for example.

Each server 4 is one example of an image identification apparatus, information processing apparatus, or computer, and outputs (identifies) an image group used for training (retraining, machine learning process) of the object detection model that achieves the fraud detection process by the fraud detection apparatus 3. The image group is one example of target images to be added to the training data used for training the object detection model. The server 4 may be a computer installed in the back office of the store, at a remote location, or the like, via a network, for example.

It should be noted that the server 4 may also have the following functions, in addition to outputting the image group.

For example, the server 4 may generate training data based on the output image group. As one example, the server 4 may attach an annotation indicating the region (e.g., position and range) of the object to be detected by the object detection model to each target image (annotate each target image with the region), according to operations by the operator or the like, and output training data where the target images and annotations are associated. It should be noted that the generation of the training data may be performed not only by the server 4, but also by a first computer (hereinafter, the server 4 and the first computer are referred to as the "training data generation apparatus") that has obtained the target images from the server 4.

Additionally, for example, the server 4 may execute training (retraining) of the object detection model based on the generated training data. As one example, the server 4 may update various parameters of the Neural Network (NN) of the object detection model so that a loss function based on the detection results that are output in response to the input of the target image, e.g., the region where an object was detected and the region indicated by the annotation, is minimized. The training method for the object detection model is not limited to the above-described process, and various other methods may be used. It should be noted that the training of the object detection model may be performed not only by the training data generation apparatus but also by the fraud detection apparatus 3 or a second computer that has obtained the training data from the training data generation apparatus. Hereinafter, the training data generation apparatus, the fraud detection apparatus 3, and the second computer are referred to as the "machine learning apparatus".

When training is performed by the machine learning apparatus, the machine learning apparatus may output (provide) the trained object detection model to the fraud detection apparatus 3. Additionally, the trained object detection model may be appropriately retrained according to changes in the installation environment of either or both of the camera 2 and the POS device **5,** or changes in the items to be processed, through the cooperation of the server **4,** the training data generation apparatus, and the machine learning apparatus. It should be noted that the inference process using the object detection model may be performed in the fraud detection apparatus 3 as at least a part of the fraud detection process.

It should also be noted that the functions of the server 4 and the functions of the fraud detection apparatus 3 may be collectively embodied in a single server **4,** as exemplified in FIG. 6. In this case, the server 4 may have the functions of the fraud detection apparatus 3, in addition to the function of identifying an image group.

The following description assumes the case in which the system 1 includes the fraud detection apparatus 3 and the server **4,** as illustrated in FIG. 5.

### (B-2) Description of Server

First, the server 4 according to one embodiment will be described. The server 4 may identify target images to be added to the training data used for training the object detection model by performing the following processes (i) to (iii).
(i) The server 4 calculates statistical information of the position of a detection region of an object in each image in a first image group based on the position of the detection region obtained by inputting the first image group into the object detection model.
(ii) The server 4 obtains the position of the detection region of the object in each image in a second image group by inputting the second image group into the object detection model.
(iii) The server 4 identifies a target image in which a detection region having an appearance probability equal to or less than a threshold is present, from a plurality of images included in the second image group, based on the statistical information, the target image being to be added to training data used for training the object detection model.

As described above, according to the server 4 of one embodiment, detection regions with appearance probabilities equal to or lower than the threshold in a plurality of images included in the second image group can be determined as over-detections (false detections), and images in which such over-detections have occurred can be identified as target images. Accordingly, target images to be added to the training data used for training the object detection model can be easily identified by the server 4.

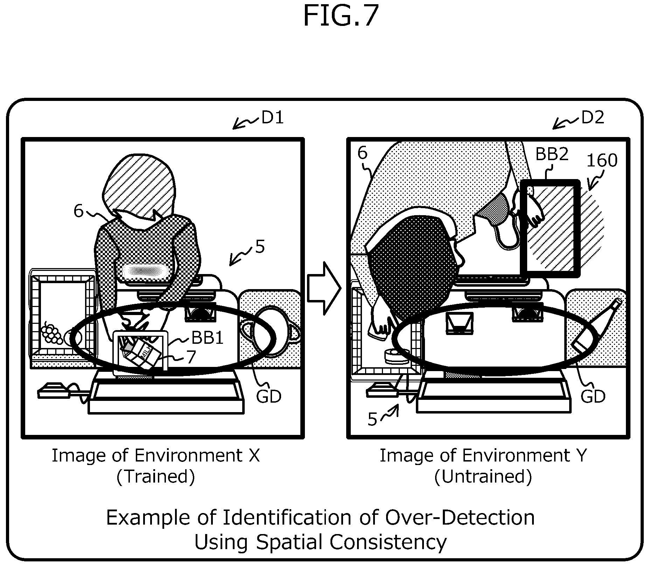

FIG. 7 is a diagram illustrating examples of an identification of an over-detection using spatial consistency. In the following, one example of processing by the server 4 will be described with reference to FIG. 7.

The first image group may be, for example, an image group known to the object detection model, or may be an image group captured by the system 1 using the object detection model in an environment where the probability of occurrences of irregular behaviors is relatively low. The known image group may be, for example, a plurality of images included in training data used for training the object detection model, e.g., a plurality of images captured in the environment X, as one example. The reference symbol D1 in FIG. 7 denotes one example of an object detection result for an image of the environment X (an image in the first image group) included in the training data for the object detection model.

The second image group may be, for example, an image group unknown to the object detection model, or may be an image group captured by the system 1 using the object detection model in an environment where the probability of occurrences of irregular behaviors is relatively high. In one embodiment, the second image group may be, e.g., a plurality of images captured in the environment Y. The reference symbol D2 in FIG. 7 denotes one example of an object detection result for an image of the environment Y (an image in the second image group), which is not used for training the object detection model.

Both the first image group and the second image group may be, for example, image groups captured under similar imaging conditions. Similar imaging conditions may mean that the relationship between the installation positions of the camera 2 and the POS device 5, the imaging ranges, and other conditions are similar. In this case, it can be considered that there is spatial consistency between the first image group captured in the environment X and the second image group captured in the environment Y. Spatial consistency refers to the property that even if the environments are different, there is a certain regularity in the positions (detection regions) where an object, such as the item 7, appears, between a plurality of image groups captured under similar imaging conditions.

As illustrated in FIG. 7, in cases where the installation position of the camera 2 relative to the POS device 5 of the same model is fixed, even if the imaging environment changes from the environment X to the environment Y, the relative positions of objects, such as the POS device 5 and the customer 6, in the images captured by the camera 2 in each environment remain constant. For example, in the situations denoted by the reference symbols D1 and D2 in FIG. 7, the relative positions of the POS device 5 and the customer 6 are approximately constant between the image of the environment X and the image of the environment Y. In this case, it is assumed that the detection region of the item 7, e.g., the BB1, will be frequently detected within the certain range GD in both the first image group and the second image group. The range GD is one example of the statistical information of the position of the detection region.

Therefore, if the appearance probability of an object detected in the second image group at the position is less than or equal to the threshold in relation to the range GD, the detection of the object can be considered as an over-detection unique to the environment Y. In the example denoted by the reference symbol D2 in FIG. 7, the BB2, which is a BBOX detected due to reflection of the floor surface 160 and detected outside the expected range GD (e.g., detected in a region where the appearance probability is less than or equal to the threshold) in the second image group, is determined to be an over-detection. Thus, when the statistical behavior in the second image group captured in an environment Y does not match that in the first image group captured in another environment X (for example, constantly over-detecting a pattern unique to the floor in the environment Y), the server 4 can determine the behavior as an unexpected behavior, such as an over-detection.

Therefore, the server 4 can easily identify target images, such as the target image denoted by the reference symbol D2, to be added to the training data used for training the object detection model, by the process (i) to (iii) described above. As a result, it is possible to retrain the object detection model so as not to detect the BB2, in other words, so as to adapt to the environment Y, by adding the target images and the annotations indicating the object, for example, to the training data.

Additionally, both the first image group and the second image group are images including the same imaging range (e.g., fixed-point images). In this imaging range, the relative position of the POS device 5 and the camera 2 is fixed, for example, and the behaviors of the customer 6 are also limited. By considering such spatial consistency, appropriate target images can be identified.

### (B-3) Example of Hardware Configuration

The fraud detection apparatus 3, the server 4, the POS device 5, and the first and second computers (not illustrated) included in the system 1 may each have a similar hardware configuration.

The fraud detection apparatus 3 according to one embodiment may be a virtual server (Virtual Machine, VM) or a physical server. In addition, the functions of the fraud detection apparatus 3 may be embodied by a single computer or by two or more computers. Moreover, at least a part of the functions of the fraud detection apparatus 3 may be embodied using hardware (HW) resources and network (NW) resources provided by a cloud environment.

Furthermore, the server 4 according to one embodiment may be a virtual server (VM) or a physical server. In addition, the functions of the server 4 may be embodied by a single computer or by two or more computers. Moreover, at least a part of the functions of the server 4 may be embodied using HW resources and NW resources provided by a cloud environment.

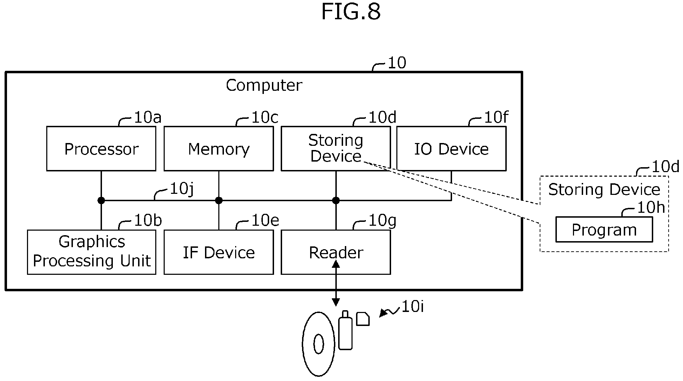

Hereinafter, an example of the HW configuration of a plurality of computers that embody the respective functions of the fraud detection apparatus 3, the server 4, the POS device 5, and the first and second computers (not illustrated) will be described using a computer 10 illustrated in FIG. 8 as a representative example of these computers.

FIG. 8 is a block diagram illustrating an example of the hardware configuration of the computer 10 according to one embodiment. When a plurality of computers are used as HW resources to embody the functions of the fraud detection apparatus 3, the server 4, the POS device 5, or the first or second computer (not illustrated), each computer may have the HW configuration exemplified in FIG. 8.

As illustrated in FIG. 8, the computer 10 may include, as an example, a processor 10a, a graphics processing unit 10b, a memory 10c, a storing device 10d, an Interface (IF) device 10e, an Input / Output (IO) device 10f, and a reader 10g, as the HW configuration.

The processor 10a is one example of a arithmetic processing unit or a hardware processor that performs various control and computations. The processor 10a may be communicably connected to each block in the computer 10 via a bus 10j. The processor 10a may be a multiprocessor having a plurality of processors, may be a multicore processor having a plurality of processor cores, or may be configured to have a plurality of multicore processors.

Examples of the processor 10a include integrated circuits (ICs), such as a Central Processing Unit (CPU), a Micro Processing Unit (MPU), an Accelerated Processing Unit (APU), a Digital Signal Processor (DSP), an Application Specific IC (ASIC), or a Field-Programmable Gate Array (FPGA), for example. It should be noted that two or more combinations of these integrated circuits may be used for the processor 10a.

The graphics processing unit 10b controls screen displays to an output device such as a monitor, which is a part of the IO device 10f. Additionally, the graphics processing unit 10b may have a configuration as an accelerator that performs machine learning processes and inference processes using machine learning models. Examples of the graphics processing unit 10b include various processing units, such as integrated circuits (ICs), e.g., a graphics processing unit (GPU), APU, DSP, ASIC, or FPGA.

The memory 10c and the storing device 10d each store information, such as various types of data and programs. Examples of the memory 40c include one or both of a volatile memory such as a Dynamic Random Access Memory (DRAM) , and a non-volatile memory such as a Persistent Memory (PM), for example. Examples of the storing device 10d include various storing devices such as magnetic disk devices, e.g., a Hard Disk Drive (HDD), semiconductor drive devices, e.g., a Solid State Drive (SSD), and non-volatile memory. Examples of the nonvolatile memory include a flash memory, a Storage Class Memory (SCM) , and a Read Only Memory (ROM).

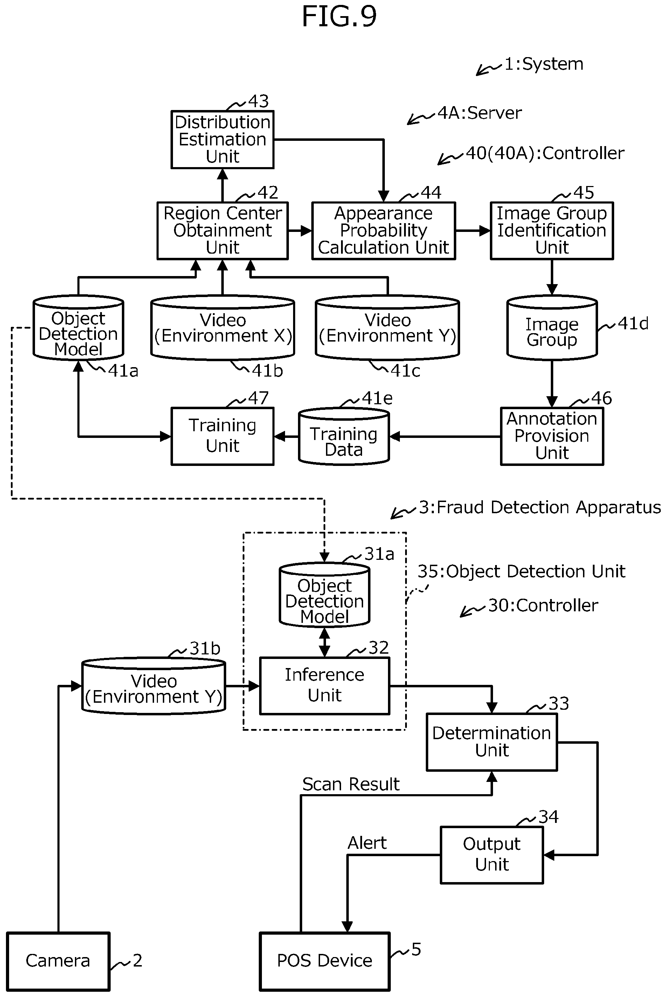

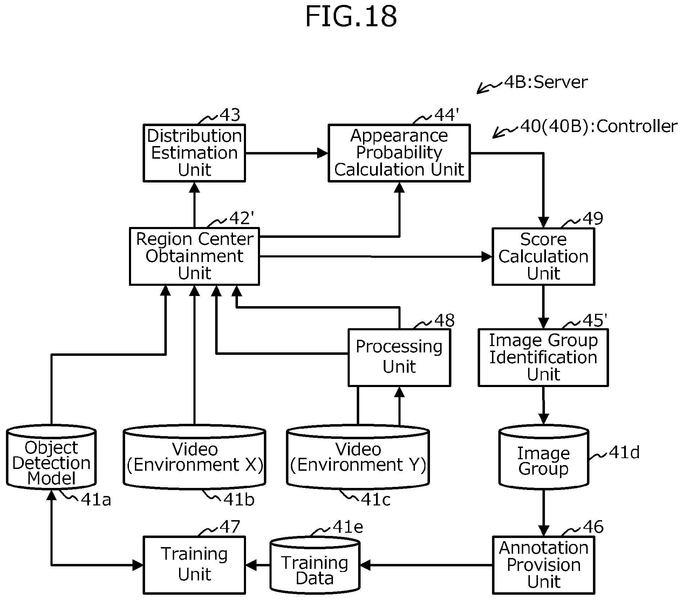

The storing device 10d may store a program 10h (information processing program) for embodying all or a part of the various functions of the computer 10. For example, the processor 10a in the fraud detection apparatus 3 may embody the functions of a controller 30 (see FIG. 9) described later by loading the program 10h (e.g., a machine learning program or fraud detection program, etc.) stored in the storing device 10d into the memory 10c and executing the program 10h. For example, the processor 10a in the server 4 can embody the functions of a controller 40 (see FIGS. 9 and 18) by loading the program 10h (e.g., a target image identification program, training data generation program, or machine learning program, etc.) stored in the storing device 10d into the memory 10c and executing the program 10h. Furthermore, for example, the processor 10a in the POS device 5 can embody the functions of the POS device 5 by loading the program 10h (e.g., a POS program, etc.) stored in the storing device 10d into the memory 10c and executing the program 10h.

The IF device 10e is one example of a communication IF that performs processing, such as control on connections and communications between the computer 10 and the camera 2, between computers 10, between the computer 10 and another computer, and the like. For example, the IF device 10e may include an adapter that is compliant with electronic communications, such as Ethernet^{®} (e.g., a local area network (LAN)), or optical communications, such as Fibre Channel (FC), etc. This adapter may support either or both of wireless and wired communication methods. It should be noted that the program 10h may be downloaded from a network to the computer 10 via the communication IF and stored in the storing device 10d.

The IO device 10f may include either or both of an input device and an output device. Examples of the input device include a keyboard and a mouse, for example. Examples of the output device include a monitor, a projector, and a printer, for example. The output device may be connected to the graphics processing unit 10b. The IO device 10f may also include a touch panel that integrates an input device and an output device. For example, the IO device 10f in the POS device 5 may include a touch panel as a user IF for customers.

The reader 10g is one example of a reader that reads information, such as data and programs, recorded on a storage medium 10i. The reader 10g may include a connection terminal or device to which the storage medium 10i can be connected or inserted. Examples of the reader 10g include adapters that are compliant with standards, such as Universal Serial Bus (USB), drive devices that access recording disks, and card readers that access flash memory, such as SD cards, for example. It should be noted that the program 10h may be stored in the storage medium 10i, and the reader 10g may read the program 10h from the storage medium 10i and store the program 10h in the storing device 10d.

Examples of the storage medium 10i include, as an example, non-transitory computer-readable storage media (recording medium) such as magnetic/optical disks and flash memory. Examples of magnetic/optical disks may include, as an example, flexible disks, Compact Discs (CDs), Digital Versatile Discs (DVDs), Blu-ray discs, and Holographic Versatile Discs (HVDs). Examples of the flash memory include semiconductor memory such as USB memory and SD cards.

The HW configuration of the computer 10 described above is exemplary. Accordingly, HW components may be added or deleted (any block may be added or deleted, for example), divided, integrated in any combination, or buses may be added or deleted, in the computer 10 as appropriate.

For example, the POS device 5 may include a hardware configuration specific to a self-checkout register, in addition to the hardware configuration illustrated in FIG. 8. Examples of the hardware configuration specific to a self-checkout register include a scanner device that reads labels (e.g., barcode labels) and various payment devices that perform a settlement process (payment) using cash, credit cards, electronic money, or the like, for example. The scanner device may include either or both of a scanner integrated with the POS device 5 and a handheld scanner that can be held by the customer. It should be noted that the scanner device may also include a wireless communication device that reads (recognizes) information recorded in an IC tag (label), such as a Radio Frequency Identification (RFID) tag, attached to an item, in place of or in addition to a barcode label.

### (C) First Example

### (C-1) Example of Functional Configuration

FIG. 9 is a block diagram illustrating an example of the functional configuration of the system 1 according to the first example. In the following description, it is assumed for the sake of convenience that each functional configuration provided in the system 1 is provided in only one of the fraud detection apparatus 3 and a server 4A, but this is not limiting. Each functional configuration may be provided redundantly in both the fraud detection apparatus 3 and the server 4A, or may be provided in a distributed or divided manner. In addition, the functions provided in the server 4A may be provided in another computer (e.g., the first or second computer).

The fraud detection apparatus 3 may include, as an example, an inference unit 32, a determination unit 33, and an output unit 34, as a functional configuration. The fraud detection apparatus 3 may also have a storage area capable of storing at least one type of information of an object detection model 31a and a video 31b. The inference unit 32 and the object detection model 31a are examples of the object detection unit 35. Additionally, the inference unit 32 (object detection unit 35), the determination unit 33, and the output unit 34 are examples of the controller 30.

The server 4A is one example of the server 4 and may include, as an example, a region center obtainment unit 42, a distribution estimation unit 43, an appearance probability calculation unit 44, an image group identification unit 45, an annotation provision unit 46, and a training unit 47, as a functional configuration. The server 4A may also have a storage area capable of storing at least one type of information of the object detection model 41a, videos 41b and 41c, an image group 41d, and training data 41e. The region center obtainment unit 42, the distribution estimation unit 43, the appearance probability calculation unit 44, the image group identification unit 45, the annotation provision unit 46, and the training unit 47 are examples of the controller 40A (40).

Each of the functions of the controller 30 of the fraud detection apparatus 3 and the controller 40A of the server 4 may be embodied by the processor 10a illustrated in FIG. 8 by executing the program 10h on the memory 10c. In addition, each of the functions of the storage area of the fraud detection apparatus 3 and the storage area of the server 4 may be embodied by a storage area in either or both of the memory 10c and the storing device 10d illustrated in FIG. 8.

In response to a label on an item being scanned by a scanner device, such as a scanner or wireless communication device, the POS device 5 outputs the scan result including the number of items (item count) recognized through scanning, to the fraud detection apparatus 3 (determination unit 33). The scan result is one example of the event information.

Furthermore, in response to obtaining an alert indicating that a fraudulent behavior has been detected related to the scan result, from the fraud detection apparatus 3 (output unit 34), the POS device 5 may perform an alert process. The alert process may include either or both of a process of displaying a screen according to the content of the alert on the IO device 10f (e.g., touch panel) of the POS device 5, and a process of outputting a notification according to the content of the alert to employees of the retailer (store), for example. Moreover, in the alert process, the POS device 5 may notify the content of the alert to the POS system.

### (Description of Functional Configuration Example of Server 4A)

Next, an example of the functional configuration of the server 4A for embodying the process according to the first example of one embodiment will be described with reference to FIG. 9.

The region center obtainment unit 42 obtains the position of the detection region of an object in each of the videos 41b and 41c obtained by inputting the videos 41b and 41c into the object detection model 41a. An example of the detection region is, for example, a BBOX.

The video 41b may include a plurality of images captured by the camera 2 in the environment X and may include, for example, images used for training the object detection model 41a. The video 41c may include a plurality of images captured by the camera 2 in the environment Y. Hereinafter, the video 41b may be referred to as "video (environment X)," "video X, "or "existing video (X)," and the video 41c may be referred to as "video (environment Y) ," "video Y," or "new video (Y)."

In one embodiment, each of the video X and the video Y used by the controller 40A (40) may be a video clip obtained by extracting frames during the period from the start to the end of the checkout by each of a plurality of customers 6 from the original recorded data captured by the camera 2. In other words, each of the video X and the video Y may exclude frames in which a customer 6 moves with items 7 placed in a basket before the checkout starts, or with the items 7 placed in a bag after the checkout ends (such frames are removed).

As one example, the controller 40A may obtain operation information, such as a log of operations of the POS device 5 by the customer 6 in the environment X or the environment Y. The controller 40A may then identify the frames from the start to the end of the checkout operation by matching the time in the obtained operation information with the frames in the video X or the video Y.

In response to the video X or the video Y being input, the object detection model 41a outputs regions indicating objects included in each image, for example, BBOXes, as the detection result. For example, the object detection model 41a may be a trained machine learning model trained using images captured in the environment X (as one example, the video X).

For example, the region center obtainment unit 42 extracts the center positions where the BBOXes appear in the video X and the video Y obtained by inputting the video X and the video Y into the object detection model 41a, and may record the extracted center positions in a storage area, such as the memory 10c, for each image included in the video X and the video Y. The center position may be the center of the region of the BBOX, or various other representative points. The center position may be represented by coordinates, for example. Hereinafter, the center position of a BBOX may be referred to as "BBOX center."

The distribution estimation unit 43 calculates statistical information of the center positions of the detection regions, based on the center positions of the detection regions recorded for each image included in the video X by the region center obtainment unit 42. One example of the statistical information is a Gaussian mixture distribution using a Gaussian Mixture Model (GMM). It should be noted that the statistical information is not limited to the Gaussian mixture distribution and may be statistical information obtained by various other methods, e.g., the clusters obtained by various clustering techniques such as K-means, as one example.

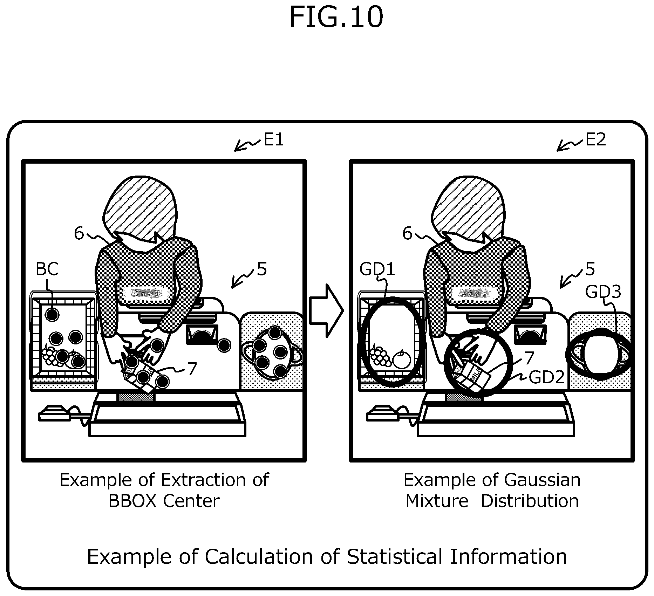

FIG. 10 is a diagram illustrating one example of the calculation of the statistical information. The reference symbol E1 denotes the BBOX centers BC extracted by the region center obtainment unit 4 from each of the plurality of images included in the video X. The reference symbol E2 denotes one or more distributions obtained by approximating the plurality of BBOX centers BC with a Gaussian mixture distribution (hereinafter sometimes referred to as "Gaussian distributions GD" or simply "GD").

As denoted by the reference symbol E2, the distribution estimation unit 43 classifies the plurality of BBOX centers BC into one or more (three in the example of FIG. 10) Gaussian distributions GD1 to GD3 through clustering based on GMM, for example. It is indicated by each of the Gaussian distributions GD1 to GD3 that the closer a point is to the center of the distribution, the higher the probability that the BBOX center of the object appears there; in other words, the appearance probability of the BBOX center increases as the point approaches the center of the distribution. As denoted by the reference symbol E2, the Gaussian distributions GD1 to GD3 empirically tend to appear in the area to place baskets, in front of the scanner, and the area to place bags in the POS device 5, for example.

When a new BBOX center appears in an estimation of the Gaussian distributions GD by the distribution estimation unit 43, whether the BBOX center is a likely or unlikely event can be calculated based on the positional relationship of the BBOX center with the Gaussian distribution GD.

It should be noted that increasing the number of Gaussian distributions GD (i.e., finer granularity) allows for a more precise estimation of the appearance probability. However, this also leads to greater sensitivity to deviations in the position of a BBOX center and reduced generalization to other environments. On the other hand, reducing the number of Gaussian distributions GD (i.e., coarser granularity) leads to greater tolerance to deviations in the position of the BBOX center. However, it also increases the risk of failing to find over-detections.

Therefore, the distribution estimation unit 43 may determine (calculate) the number of Gaussian distributions GD, for example, based on an information criterion. The information criterion is an index that measures the quality of a model and can be calculated using various mathematical approaches. For example, the distribution estimation unit 43 may calculate the information criterion indicating how well the BBOX centers can be approximated by a Gaussian mixture distribution while varying the number of Gaussian distributions GD estimated by GMM. The distribution estimation unit 43 may then estimate the Gaussian distributions GD1 to GD3 such that the number of GDs corresponds to the value that optimizes (e.g., minimizes) the information criterion, in other words, the value that achieves an optimal trade-off between the number of GDs and the approximation accuracy.

Furthermore, in another method, as one example, a heuristic approach may be used instead of the process of obtaining the BBOX centers in the video X by the region center obtainment unit 42 and the process by the distribution estimation unit 43, in other words, the process of estimating the Gaussian distributions GD. As one example, the controller 40A may use a range designated by the operator or the like, or an approximate range determined according to the positions of the detection regions of BBOXes identified by the object detection model, as the range (statistical information) in which the appearance probability of an item 7 in the environment X is greater than the threshold. In this manner, the controller 40A may calculate statistical information of the positions of the detection regions in the video X using a heuristic approach.

The appearance probability calculation unit 44 calculates the appearance probability of the BBOX centers obtained by the region center obtainment unit 42 from the video Y, based on the statistical information of the positions of the detection regions. As one example, the appearance probability calculation unit 44 may calculate the probability that the coordinates of the BBOX center appear with respect to a Gaussian distribution GD as the appearance probability. It should be noted that, when there are a plurality of Gaussian distributions GD1 to GD3, the appearance probability calculation unit 44 may calculate the appearance probability of the coordinates of the BBOX center with respect to each Gaussian distribution GD, and obtain the largest value among the calculated appearance probabilities, as the appearance probability of the BBOX center, for example.

The image group identification unit 45 identifies, as target images, frames that include BBOX centers of which appearance probabilities are equal to or lower than a threshold (first threshold) among the plurality of frames in the video Y, and stores information indicating the target images in the image group 41d. The information indicating the target images may be the data of the frames (images) per se, or information indicating the frame numbers of the target images in the video Y.

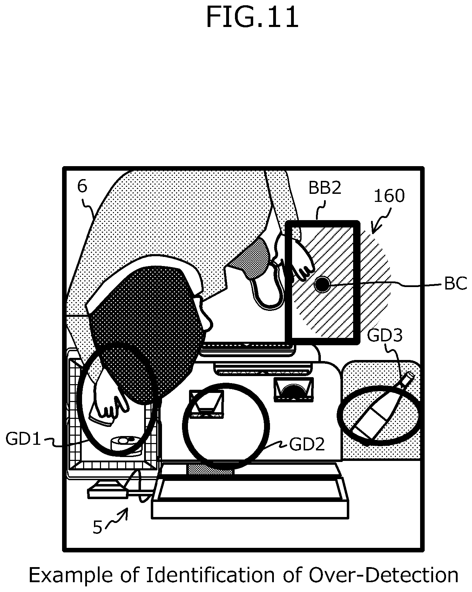

FIG. 11 is a diagram illustrating an example of the identification of an over-detection. FIG. 11 illustrates an example in which a BB2 is detected due to reflection from the floor surface 160 at a position distant from any of the Gaussian distributions GD1 to GD3. The BBOX center of the BB2 is denoted by the reference symbol BC. This BBOX center BC is distant from all of the centers of the Gaussian distributions GD1 to GD3, and the appearance probability of the BBOX center BC is equal to or lower than the threshold.

As exemplified in FIG. 11, a BBOX center BC of which appearance probability is equal to or lower than the threshold can be regarded as a detection region suspected of being an over-detection, in relation to the statistical information about the video X. By adding a frame captured in the environment Y, which includes such a detection region, to the training data together with an annotation indicating the correct object (item 7), the object detection model 41a can be retrained to rectify the over-detection in the environment Y.

In addition to the information indicating the target images, for example, the image group identification unit 45 may also store information, such as the coordinates of BBOX centers of which appearance probabilities are equal to or lower than the threshold, classification such as an over-detection or under-detection, etc., as hints for the operator, in the image group 41d, while associating such information with the target images. However, such hints may be noise for the operator when the operator adds annotations indicating the correct objects to the target images. Thus, the operator or the administrator of the system 1 can select whether or not to add or display the hints.

So far, the example of the functional configuration of the server 4A as an image identification apparatus has been described. In the following, an example of the functional configuration of a training data generation apparatus by the server 4A or the first computer will be described.

The annotation provision unit 46 adds an annotation, which is one example of the ground truth label (ground truth data), to each of one or more frames (target images) included in the image group 41d. For example, the annotation provision unit 46 may present each frame to the operator, obtain a region indicating the object (for example, a rectangular region) designated by the operator as an annotation, and store the frame and the annotation while associating them in the training data 41e.

As one example, the annotation provision unit 46 may sequentially present (display) one or more frames included in the image group 41d to the output device via the IO device 10f, or to an output device of a terminal used by the operator via the IF device 10e. The annotation provision unit 46 may obtain a region designated by the operator indicating the item 7 in the frame via the input device, as an annotation. If the addition or display of a hint is enabled, the annotation provision unit 46 may present the hint to the output device.

Next, an example of the functional configuration as a machine learning apparatus by the server 4A, the fraud detection apparatus 3, the first computer, or the second computer will be described.

In a machine learning process, the training unit 47 performs training (retraining) of the object detection model 41a using the training data 41e including a plurality of sets of target images and annotations. As one example, the training unit 47 may update (optimize) various parameters of the NN of the object detection model 41a so that the loss function based on the detection region of an object output from the object detection model 41a in response to an input of the target image, and the region indicated by the annotation is minimized. The method to train the object detection model 41a is not limited to the above-described process, and various methods may be used.

The training unit 47 trains the object detection model 41a by performing the above-described process for each of the plurality of sets of target images and annotations included in the training data 41e. As the method for determining the end of the machine learning process for the object detection model 41a, various known methods may be adopted. After the end of the machine learning process, the training unit 47 may output (provide) the retrained object detection model 41a, as the object detection model 31a, to the fraud detection apparatus 3.

### (Description of Example of Functional Configuration of Fraud Detection Apparatus 3)

Next, an example of the functional configuration of the fraud detection apparatus 3 will be described with reference to FIG. 9.

The inference unit 32 (object detection unit 35), the determination unit 33, and the output unit 34 perform a fraud detection process in the operation phase, based on a video 31b output from the camera 2 installed in the environment Y and a scan result input from the POS device 5.

The video 31b may include a plurality of images captured by the camera 2 in the environment Y. Hereinafter, the video 31b may be referred to as the video Y. The plurality of images included in the video 31b are examples of a plurality of captured images obtained by capturing a plurality of items 7 subject to fraud detection. It should be noted that the video 41c used by the server 4A may be a video captured by the camera 2 in the environment Y during the training phase of the object detection model 31a, which precedes the operation phase, and may be provided to the server 4A from the camera 2 or the fraud detection apparatus 3.

The inference unit 32 (object detection unit 35) performs an inference process using the trained object detection model 31a that has been trained by the training unit 47.

For example, in the fraud detection process, the inference unit 32 may sequentially input each of the plurality of frames included in the video Y to the object detection model 31a, obtain a detection result output from the object detection model 31a, and output the detection result to the determination unit 33. When an object is detected in the frame, the detection result may include information indicating the detection region of the object.

The detection result may also include action information indicating that the customer 6 has picked up the object (item 7) from the basket on one of the tables of the POS device 5, that the customer 6 has placed the object (item 7) into the bag attached to the other table of the POS device 5, and other actions. Examples of the method used by the inference unit 32 to obtain such action information include at least one of the following approaches (a) to (c), for example.
(a) The inference unit 32 obtains the action information from the object detection model 31a trained to further output the action information.
(b) The inference unit 32 detects the movement of the object from the location of one table of the POS device 5 or to the location of the other table, based on detection results of the object detection model 31a across a plurality of consecutive frames and a tracking algorithm. It should be noted that the locations of the one and the other tables of the POS device 5 may be defined in advance.
(c) The inference unit 32 obtains the action information using a machine learning model different from the object detection model 31a, which is trained to output action information in response to an input of the frame.

The determination unit 33 compares the detection result input from the inference unit 32 with the scan result input from the POS device 5, and outputs information (determination result) indicating whether fraud has been detected or not based on the comparison result, to the output unit 34.

For example, the determination unit 33 may compare the number of objects detected within a given time span (a given number of frames) , with the number of objects scanned within the given time span. The determination unit 33 may determine that there is no fraud (no detect fraud is detected) if the two numbers match, and may determine that there is fraud (fraud is detected) if the two numbers do not match, for example.

It should be noted that the same object detected across the given number of frames may be counted as "1" in number. Such determination may be made based on a tracking algorithm, for example.

Furthermore, if the detection result by the inference unit 32 includes action information, the determination unit 33 may identify the numbers of items 102 and 103 in the illustrations denoted by the reference symbols A1 to A3 in FIG. 1, further based on the action information, for example. It should be noted that the number of items 101 in the illustrations denoted by the reference symbols A1 to A3 in FIG. 1 is the number of objects scanned within the given time span based on the scan result, for example.

The determination result output from the determination unit 33 may include at least one of the following information: an indication that fraud has been detected, the frame in which the fraud was detected, the mismatched detection result and scan result, and the numbers of items 101 to 103 (see FIG. 1).

The output unit 34 outputs an alert to the POS device 5 based on the determination result input from the determination unit 33. The alert is one example of information indicating that a fraudulent behavior has been detected regarding the scan result. The output unit 34 may output the alert to a terminal device used by employees of the store (retailer), e.g., a Personal Computer (PC), smartphone, or tablet terminal. The alert may include at least one type of information included in the determination result described above.

As described above, according to the system 1 according to the first example, the server 4 can easily identify the target images to be added to the training data used for training the object detection model 41a. Additionally, the training data generation apparatus can generate appropriate training data so that the object detection model 41a adapted to the environment X can also be adapted to the environment Y. Furthermore, the machine learning apparatus can appropriately perform training so that the object detection model 41a is adapted to the environment Y. In addition, the fraud detection apparatus 3 can perform an appropriate fraud detection process in the environment Y using the object detection model 41a (31a) trained to be adapted to the environment Y.

### (C-2) Example of Operation

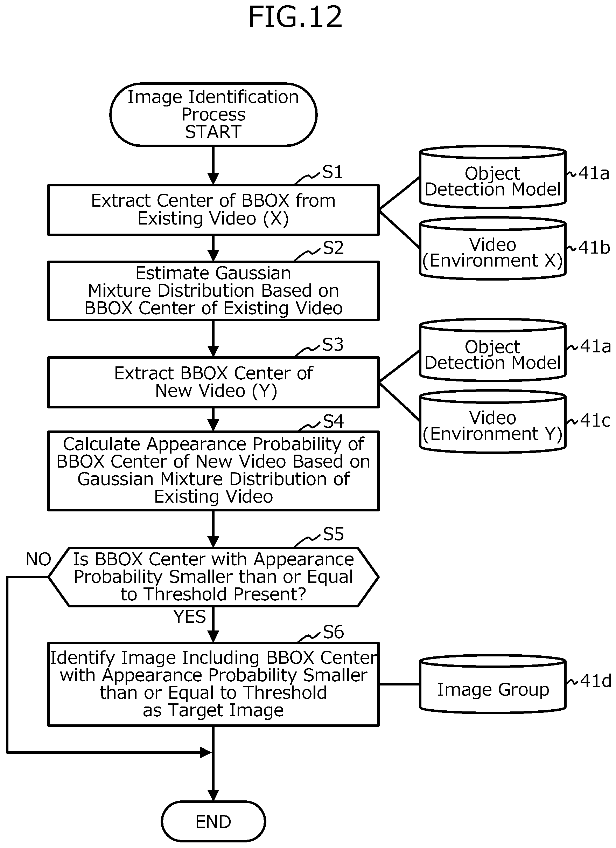

Next, the operation of the system 1 according to the first example will be described with reference to FIGS. 12 to 15.

### (Image Identification Process)

FIG. 12 is a flowchart illustrating an example of the operation of the image identification process. As exemplified in FIG. 12, the region center obtainment unit 42 in the server 4A extracts BBOX centers in each image obtained by inputting the video X to the object detection model 41a (Step S1).

The distribution estimation unit 43 estimates a Gaussian mixture distribution based on the BBOX centers in the video X (Step S2).

The region center obtainment unit 42 extracts the BBOX centers in each image obtained by inputting the video Y to the object detection model 41a (Step S3). It should be noted that Step S3 may be performed before or after Step S1.

The appearance probability calculation unit 44 calculates the appearance probabilities of the BBOX centers in the video Y based on the Gaussian mixture distribution of the video X (Step S4).

The image group identification unit 45 determines whether or not a BBOX center with an appearance probability less than or equal to the threshold is present, for each image in the video Y (Step S5), and identifies an image including a BBOX center with an appearance probability less than or equal to the threshold as a target image (YES in Step S5 and Step S6). For example, the image group identification unit 45 stores the identified target image in an image group 41d and ends the process. It should be noted that the image group identification unit 45 skips the execution of Step S6, for images without a BBOX center with an appearance probability less than or equal to the threshold (NO in Step S5).

### (Training Data Generation Process)

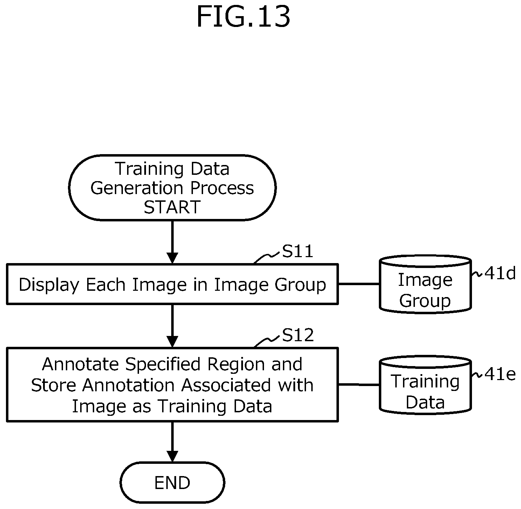

FIG. 13 is a flowchart illustrating an example of the operation of the training data generation process. As exemplified in FIG. 13, the annotation provision unit 46 in the server 4A, which is one example of the training data generation apparatus, displays each of the images in the image group 41d on a display device of the server 4A or on a display device of a terminal of the operator, for example (Step S11).

The annotation provision unit 46 designates, for each image, the region designated by the operator as an annotation, and stores the image and the annotation in training data 41e while associating them with each other (Step S12), and ends the process.

### (Machine Learning Process)

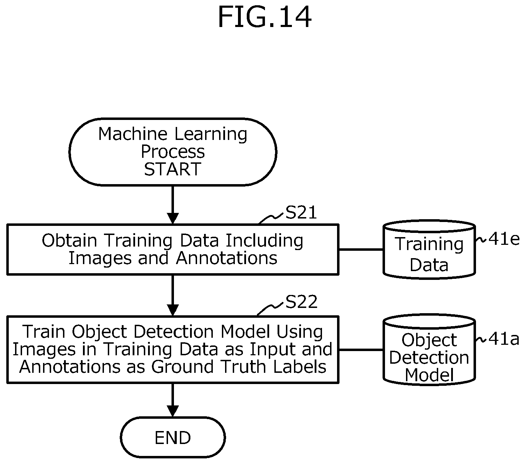

FIG. 14 is a flowchart illustrating an example of the operation of the machine learning process. As exemplified in FIG. 14, the training unit 47 in the server 4A, which is one example of a machine learning apparatus, obtains the training data 41e including images and annotations (Step S21).

The training unit 47 trains (retrains) the object detection model 41a by using the images in the training data 41e as an input and using the annotations as ground truth labels (Step S22), and ends the process.

### (Fraud Detection Process)

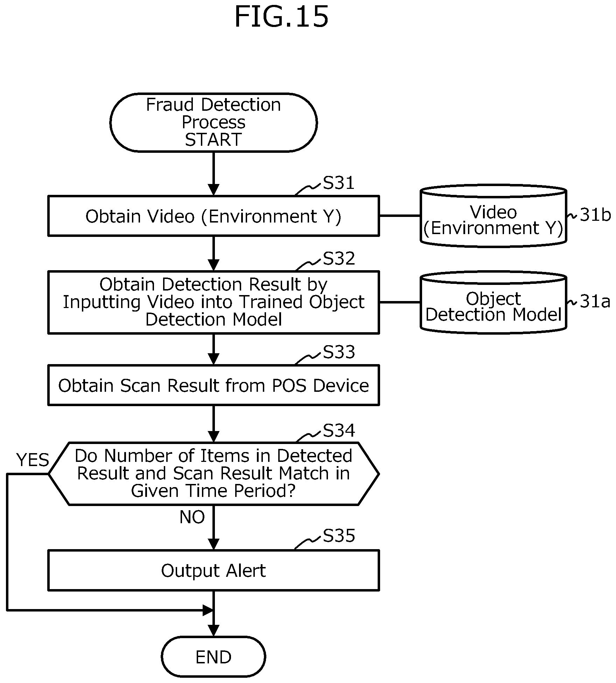

FIG. 15 is a flowchart illustrating an example of the operation of the fraud detection process. As exemplified in FIG. 15, the inference unit 32 in the fraud detection apparatus 3 obtains a video Y captured by the camera 2 (Step S31).

The inference unit 32 inputs each of a plurality of images in the video Y into the trained object detection model 31a, obtains a detection result (Step S32), and outputs the detection result to the determination unit 33.

The determination unit 33 obtains a scan result from the POS device 5 (Step S33). It should be noted that Step S33 may be performed before or after Step S31. The determination unit 33 compares the detection result and the scan result, and outputs, to the output unit 34, a determination result indicating whether the number of items in the detection result and the scan result within a given time period match.

If the number of items in the detection result and the number of items in the scan result within the given time period match (Step S34 and YES in Step S34), the output unit 34 refrains from outputting an alert, and ends the process. In this case, the output unit 34 may notify the POS device 5 of information indicating that no fraudulent activity has been detected.

On the other hand, if the numbers of items do not match (NO in Step S34), the output unit 34 outputs an alert (Step S35), and ends the process.

### (D) Second Example

Next, a server 4B according to a second example of one embodiment (see FIG. 18) will be described. In the first example, the approach has been described in which the server 4A identifies target images from the video Y by utilizing the property of spatial consistency. In the second example, an approach will be described in which target images from the video Y are identified by combining one or both of the properties of image consistency and temporal consistency, in addition to spatial consistency.

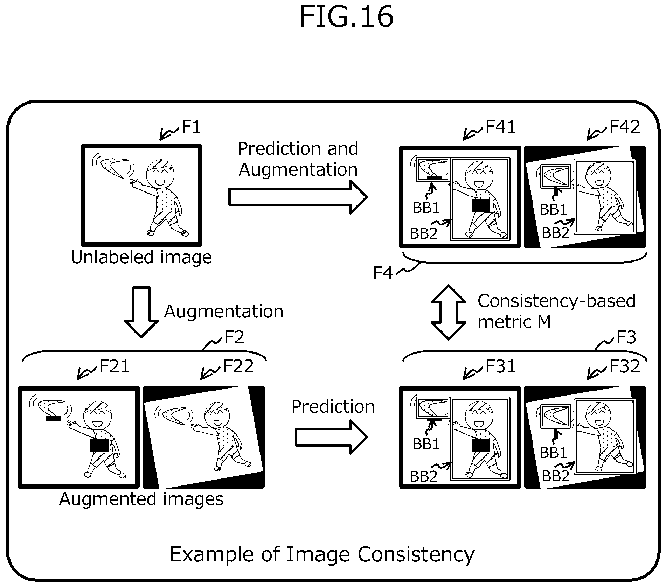

FIG. 16 is a diagram illustrating one example of image consistency. Image consistency is a property that if the outputs of the object detection model 41a (object detector) are stable, in other words, reliable, a similar output can be obtained even if the image is processed (i.e., augmented).

The reference symbol F1 in FIG. 16 denotes an original (unlabeled) image that is unprocessed. The reference symbol F2 denotes images to which processing (Data Augmentation) has been applied to the unlabeled image F1, such as an image F21 with portions blacked out and an image F22 that is rotated, for example. The reference symbol F3 denotes images F31 and F32 that are the results after executing a prediction of object regions by the object detection model 41a on the processed images F21 and F22, respectively. The reference symbol F4 denotes processed (augmented) images, e.g, images F41 and F42, which are the results of applying processing such as blacking out portions or rotating, to the results after executing the prediction of object regions by the object detection model 41a on the unlabeled image F1.

According to the property of image consistency, if outputs of the object detection model 41a are stable, it is assumed that the BBOX1 and BBOX2 in the images F31 and F32 denoted by the reference symbol F3 and the BBOX1 and BBOX2 in the images F41 and F42 denoted by the reference symbol F4 match. From this assumption (property), if there is any detection result that is newly appeared or disappeared after the images are processed, it can be determined that image consistency is lost.

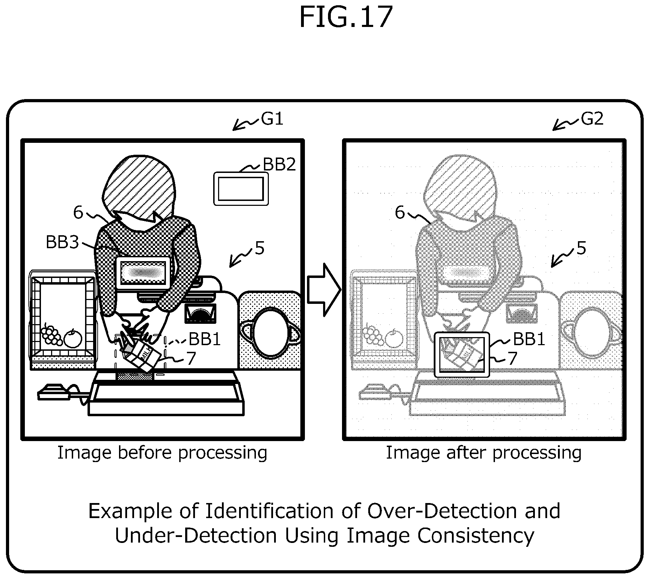

FIG. 17 illustrates an example of an identification of an over-detection and under-detection using image consistency. The reference symbol G1 denotes an object detection result for an image before processing, and the reference symbol G2 denotes an object detection result for the image after processing, such as a change of the hue, for example.

In the image before processing, the BBOX1 of an item 7 is an under-detection (e.g., continuous under-detection across preceding and succeeding frames), and the BBOX2 and BBOX3 are over-detections (e.g., continuous over-detections across preceding and succeeding frames). It should be noted that the BBOX2 is an over-detection due to the reflection on the floor behind the customer 6, and BBOX3 is an over-detection due to the scanning light (red) from the POS device 5 being reflected on the abdomen of the customer 6.

In the image after processing, the light on the floor and the abdomen of the customer 6 is dimmed due to the change of the hue, and the BBOX2 and BBOX3, which were continuously over-detected, disappear (they are not detected anymore). On the other hand, as a result of the change in the color of the item 7 due to the change of the hue, the continuous under-detection of the BBOX1 is resolved, so that the BBOX1 is detected.

Thus, if the detection results from the object detection model 41a are different before and after processing (i.e., if image consistency is lost), the image is considered as an image that destabilizes the object detection model 41a. By adding such an image as a target image to the training data, the object detection model 41a can be retrained to rectify instability in the output from the object detection model 41a.

### (D-1) Example of Functional Configuration

FIG. 18 is a block diagram illustrating an example of the functional configuration of the server 4B according to the second example. In the following description, functional elements (e.g., with the same reference symbols) that are common with the first example, and descriptions of the processing by such functional elements are omitted. It should be noted that the fraud detection apparatus 3, the POS device 5, and the camera 2 in the system 1 according to the second example may be similar to the corresponding elements in the first example.

The server 4B is one example of the server 4. The server 4B may include a region center obtainment unit 42', an appearance probability calculation unit 44', and an image group identification unit 45', which are different from the region center obtainment unit 42, the appearance probability calculation unit 44, and the image group identification unit 45, respectively, in the server 4A. The server 4B may further include a processing unit 48 and a score calculation unit 49, in addition to the configuration of the server 4A. The region center obtainment unit 42', the distribution estimation unit 43, the appearance probability calculation unit 44', the image group identification unit 45', the annotation provision unit 46, the training unit 47, the processing unit 48, and the score calculation unit 49 are examples of the controller 40B (40).

The processing unit 48 applies processing, such as augmentation, to each of a plurality of images (original images) included in a video 41c (video Y), and outputs processed images to the region center obtainment unit 42'. Examples of types of processing include at least one of the following: geometric transformations, such as rotation, enlargement, or reduction; change of hue; and addition of noise.

For example, when performing three of the above-mentioned types of processing on one original image, the processing unit 48 may output, to the region center obtainment unit 42', three images, namely, an image obtained by applying geometric transformation to the original image, an image obtained by changing the hue of the original image, and an image obtained by adding noise to the original image. In the following description, a video obtained by applying geometric transformation to each image in the video Y may be referred to as Ya, a video obtained by changing the hue of each image in the video Y may be referred to as Yb, and a video obtained by adding noise to each image in the video Y may be referred to as Yc.

Similarly to the region center obtainment unit 42 in the server 4A, the region center obtainment unit 42' obtains the positions of the detection regions of objects in each of the video X and the video Y obtained by inputting the video X and the video Y, respectively, to the object detection model 41a. In addition, the region center obtainment unit 42' obtains the positions of the detection regions of objects, e.g., the coordinates of the BBOX centers, in each of the video Ya, the video Yb, and the video Yc obtained by inputting the video Ya, the video Yb, and the video Yc, respectively, to the object detection model 41a.

The distribution estimation unit 43 calculates statistical information of the center positions of the detection regions based on the center positions of the detection regions recorded for each image included in the video X by the region center obtainment unit 42'.

The appearance probability calculation unit 44' calculates the appearance probabilities of BBOX centers obtained from each of the video Y, the video Ya, the video Yb, and the video Yc by the region center obtainment unit 42', based on the statistical information of the positions of the detection regions. The method for calculating the appearance probabilities of BBOX centers obtained from each of the video Ya, the video Yb, and the video Yc is similar to the method for calculating the appearance probabilities of BBOX centers obtained from the video Y.

The score calculation unit 49 assigns respective scores to each image in the video Y to quantify the extents of the temporal consistency, image consistency, and spatial consistency of that image.

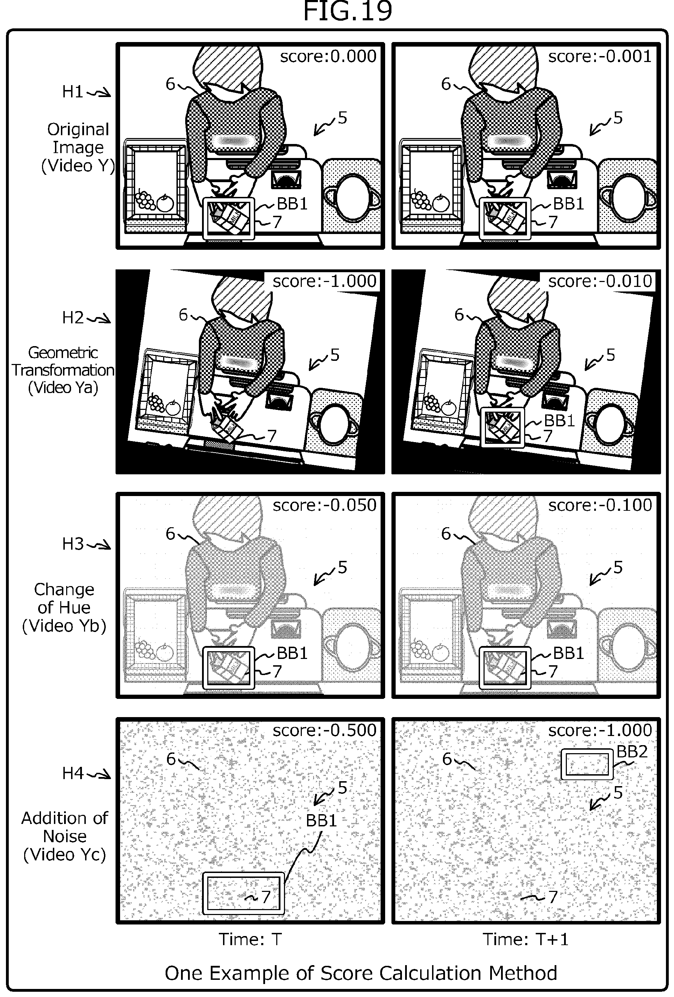

FIG. 19 is a diagram illustrating one example of a method for calculating scores. In FIG. 19, the left column illustrates the image at time T, and the right column illustrates the image at time T+1. The reference symbol H1 denotes an original image, i.e., an image included in the video Y. The reference symbol H2 denotes an image obtained by applying a geometric transformation to the original image, i.e., an image included in the video Ya. The reference symbol H3 denotes an image obtained by changing the hue of the original image, i.e., an image included in the video Yb. The reference symbol H4 denotes an image obtained by adding noise to the original image, i.e., an image included in the video Yc. At least one of the video Ya, the video Yb, and the video Yc is one example of a third image group obtained by processing each of the plurality of images included in the video Y.

According to the above-described temporal consistency and image consistency, the detection result of an object in the original image at time T in the video Y should appear at approximately the same position also in the images (denoted by the reference symbols H2 to H4) obtained by processing the image at times T and T+1 (denoted by the reference symbol H1).

Therefore, the score calculation unit 49 can determine whether or not the object detection results are consistent across the images illustrated in FIG. 19 by employing an algorithm for matching the positions of detection regions of an object across different images, such as an algorithm that calculates a score to search for the same object across different images, for example. Consistent object detection results across the images may suggest a high score and the presence of the same object detected across the images, for example. The score is one example of information indicating the matching result of the position of a detection result of an object.

As described above, in the object detection model 41a (object detector), there may be cases where the object detection results become unstable due to a lack of sufficient training data (see FIGS. 2 and 4, and the reference symbol G1 in FIG. 17). The score calculation unit 49 can detect such instability as a decrease in score, in other words, as an increase in the number of object detection results that are inconsistent.

Thus, the score calculation unit 49 calculates a score to search for the same object across comparison target images, using the original image at time T in the video Y as a reference. As an algorithm for calculating such a score, various tracking algorithms such as DeepSORT may be used. The comparison target images may include the original image at time T in the video Y, the original image at time T+1 in the video Y, and the images at times T and T+1 in each of the processed videos Ya to Yc.

For example, the score calculation unit 49 calculates, using a tracking algorithm, a relevance score (tracking score) of a BBOX present in each comparison target image, based on the position of the BBOX, the appearance information of the BBOX, the motion information of the BBOX, and the like. The tracking score is a value of "0" or higher, and is increased when the object detection results match across the comparison target images (i.e., the same object is detected), and decreased when the object detection results do not match, for example. It should be noted that the "score" illustrated in each image in FIG. 19 is the score of each image finally calculated by the score calculation unit 49 based on the tracking score.

Whether or not the object detection results match between the comparison target image at time T and the comparison target images at time T+1 can be determined based on the tracking scores in the illustrations horizontally arranged in FIG. 19. In other words, whether or not there is temporal consistency can be determined based on the tracking scores between images that are temporally sequential in the video Y.

In addition, whether or not the object detection results match between the comparison target images (the original image and images subjected to one or more processing) at time T can be determined based on the tracking scores in the illustrations vertically arranged in FIG. 19, for example. In other words, whether or not there is image consistency can be determined based on the tracking scores between the images before and after the processing between the video Y and the video Ya, the video Yb, or the video Yc.

As illustrated in FIG. 19, in the image at time T denoted by the reference symbol H2, an under-detection that lacks image consistency (disappearance of tracking of the BBOX1) occurs compared to the image at time T denoted by the reference symbol H1. Additionally, in the image at time T denoted by the reference symbol H2, an under-detection that lacks temporal consistency (disappearance of tracking of the BBOX1) occurs compared to the image at time T+1 denoted by the reference symbol H2.

Furthermore, in the image at time T denoted by the reference symbol H4, a detection that lacks image consistency (difference in the range of the BBOX1) occurs compared to the image at time T denoted by the reference symbol H1.

Additionally, in the image at time T+1 denoted by the reference symbol H4, an under-detection that lacks temporal consistency (disappearance of tracking of the BBOX1) and an over-detection that lacks temporal consistency (an over-detection of the BBOX2) occur compared to the image at time T denoted by the reference symbol H4. Furthermore, in the image at time T+1 denoted by the reference symbol H4, an under-detection that lacks image consistency (disappearance of tracking of the BBOX1) and an over-detection that lacks image consistency (an over-detection of the BBOX2) occur compared to the image at time T+1 denoted by the reference symbol H3.

The score calculation unit 49 calculates the tracking score to give a smaller tracking score to the tracking score of an image in which the above-described inconsistent detection or under-detection occurs than the tracking score of an image having the above-described consistency.

Thus, by using the tracking score, temporal consistency and image consistency can be taken into account in the identification of target images to be added to the training data.

It should be noted that the score calculation unit 49 may calculate the tracking score using only the comparison target images arranged in the horizontal direction (e.g., any one or more of images indicated by H1 to H4) or only the comparison target images arranged in the vertical direction (e.g., at time T) illustrated in FIG. 19.

Furthermore, given the spatial consistency described above, detection of an object at a location distant from the Gaussian distribution GD estimated by the distribution estimation unit 43 is unlikely. For example, in the image at time T+1 denoted by the reference symbol H4 in FIG. 19, an over-detection (an over-detection of the BB2) that lacks spatial consistency compared to the Gaussian distributions GD1 to GD3 (see the reference symbol E2 in FIG. 10) occurs.

Thus, the score calculation unit 49 reduces the final score representing a detection of an object observed at a position far from the Gaussian distributions GD in the comparison target image, based on the property of spatial consistency.

For example, the score calculation unit 49 may calculate the score "score" illustrated in each image in FIG. 19 by multiplying the calculated tracking score by the appearance probability of a BBOX center in each of the comparison target images, based on the statistical information according to the first example. As the appearance probability of the BBOX center in each of the comparison target images, the appearance probability of the BBOX center obtained from each of the video Y, the video Ya, the video Yb, and the video Yc, calculated by the above-described appearance probability calculation unit 44', may be used.

For example, in a tracking algorithm such as DeepSORT, the relevance of an object is represented by a distance function; in other words, a tracking score such that a smaller value indicates higher similarity, is obtained. When calculating such a tracking score, the score calculation unit 49 may calculate a score such that a smaller value indicates higher similarity, by multiplying the relevance (cost) by the reciprocal of the appearance probability based on the Gaussian distribution GD. Alternatively, the score calculation unit 49 may calculate a score such that a larger value indicates higher similarity, by multiplying the relevance by the logarithm of the appearance probability based on the Gaussian distribution GD.

In the example of FIG. 19, the score calculation unit 49 calculates the final score for each comparison target image by multiplying the relevance by the logarithm with base 10 of the appearance probability at the BBOX center in the comparison target image. In this case, since the relevance is a value of zero (0) or greater and the logarithm is a value of zero or less, the calculated final score has a negative value (a value closer to zero indicates higher similarity of the object).

Thus, the score calculation unit 49 can calculate a score that combines (takes into account) spatial consistency and one or both of image consistency and temporal consistency.

It should be noted that, when calculating the score, the score calculation unit 49 may impose a penalty on the score according to the state of an over-detection or under-detection of the object. For example, the score calculation unit 49 may assign a certain value (e.g., -1.000) as a penalty to the score for the image at time T, denoted by the reference symbol H2 in FIG. 19, because BB1 is an under-detection (i.e., no matching was made).

The score calculation unit 49 adds up the scores calculated for each comparison target image through the above process. For example, the score calculation unit 49 may calculate the final score of the image at time T denoted by the reference symbol H1 by calculating the sum of the scores of all the comparison target images illustrated in FIG. 19 (e.g., the scores of the other seven images compared to the original image at time T denoted by the reference symbol H1).

The score calculation unit 49 may calculate the score of each image included in the video Y by calculating the score of the original image, based on the image (original image) and processed images thereof, and images temporally continuous from the original image and processed images thereof.

The image group identification unit 45' identifies target images from the video Y using the respective scores of a plurality of images included in the video Y calculated by the score calculation unit 49.

For example, the image group identification unit 45' may identify, as target images, images in which the score calculated by the score calculation unit 49 is sufficiently small among the plurality of images included in the video Y, such as images having a score less than or equal to a threshold (second threshold), and may register them in the image group 41d. For example, the image group identification unit 45' may identify up to the smallest N (where N is an integer of 1 or greater, e.g., 1,000 as one example) target images with scores less than or equal to the threshold, or may identify the N target images with the lowest scores from among the images in the video Y.

When the score calculated for an image is small, it suggests that an over-detection or under-detection may have occurred among at least one of the images of H1 to H4 in FIG. 19 at times T and T+1. Such an image can be considered an image for which the training data lacks examples similar to that image, and as a result, the object detection model 41a (object detector) has insufficient basis for making a determination.

Thus, according to the second example, target images to be added to the training data used for training the object detection model 41a can be easily identified by taking spatial consistency into account, as in the first example.

In addition, according to the second example, the difficulty of make a determination on each image by the object detection model 41a can be quantified by using a uniform criterion that simultaneously takes into account a combination of a plurality of consistencies, thereby enabling the selection of more appropriate target images.

For example, the occurrence of a continuous under-detection and continuous over-detection can be determined while taking into account image consistency by using the tracking scores between the video Y, and the video Ya, the video Yb, or the video Yc obtained by processing the video Y, and the Gaussian distribution GD. Additionally, the occurrence of a continuous under-detection and continuous over-detection can be determined while taking into account temporal consistency by using the tracking scores across temporally consecutive images in the video Y and the Gaussian distribution GD.

There are various situations in which an over-detection can occur. For example, there may be cases where an over-detection occurs due to time-related factors, such as when the setting sun shines through a window, introducing characteristic noise into the image. Alternatively, there may be cases where an over-detection occurs due to location-related factors, such as when the floor has a characteristic pattern (e.g., floor tiles), for example. There also may be cases where an over-detection occurs due to a temporary change in the environment, such as when a Point Of Purchase (POP) advertising, advertisement, or notice is attached to the POS device 5. For example, when the system 1 is operated over a long period of time across a plurality of stores, it is impossible for the operator to virtually check all videos captured by each of a plurality of cameras 2 at a plurality of stores. According to the server 4 according to one embodiment, even when an over-detection or under-detection in the various cases described above occurs in such a situation, target images can be identified by using a uniform criterion that takes into account a combination of a plurality of consistencies.

### (D-2) Example of Operation

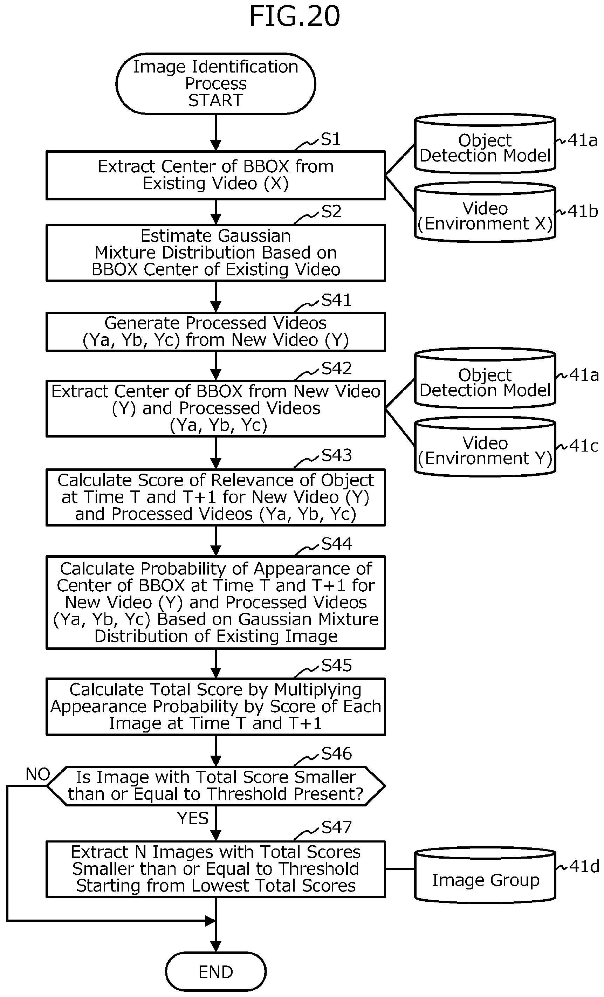

Next, the operation of the system 1 according to the second example will be described with reference to FIG. 20. FIG. 20 is a flowchart illustrating an example of the operation of the image identification process. Steps S1 and S2 are similar to Steps S1 and S2 in the flowchart according to the first example illustrated in FIG. 12.

The processing unit 48 processes each image in the video Y and generates processed videos (e.g., the video Ya, the video Yb, and the video Yc) (Step S41).

The region center obtainment unit 42' extracts the BBOX centers in each image obtained by inputting each of the video Ya, the video Yb, and the video Yc into the object detection model 41a (Step S42).

The score calculation unit 49 calculates the relevance score (tracking score) of an object at times T and T+1 for the video Y, the video Ya, the video Yb, and the video Yc (Step S43). It should be noted that Steps S41 to S43 may be performed before or after Step S1, or at least a part of the process may be performed in parallel with Steps S1 or S2.

The appearance probability calculation unit 44' calculates the appearance probability of a BBOX center in each image in the video Y, the video Ya, the video Yb, and the video Yc based on the mixture Gaussian distribution of the video X (Step S44).

The score calculation unit 49 calculates the total score by multiplying the relevance score of each image at times T and T+1 by the appearance probability of the BBOX in that image (Step S45) .

The image group identification unit 45' determines whether or not an image with a total score less than or equal to the threshold is present in the video Y (Step S46). If no image with a total score less than or equal to the threshold is present (NO in Step S46), the process ends. If an image with a total score less than or equal to the threshold is present (YES in Step S46), N images with the lowest total scores are extracted (Step S47), and the extracted images are stored in the image group 41d as target images, and the process ends.

### (E) Miscellaneous

The technology according to one embodiment described above may be modified or changed as follows.

For example, the functional elements provided in the server 4A or 4B may be combined in any combination, or each may be divided. Additionally, the functional elements provided in the fraud detection apparatus 3 may be combined in any combination, or each may be divided. Furthermore, the fraud detection apparatus 3 may be integrated with the POS device 5. When the fraud detection apparatus 3 is integrated with the POS device 5, the functional configuration of the fraud detection apparatus 3 may be provided in the POS device 5.

Furthermore, although the output unit 34 has been described as sending a message as an alert to the POS device 5, this is not limiting. Alternatively or additionally to the message, the alert may be a voice or buzzer sound that prompts the customer to re-register the item. In addition, the message is not limited to a phrase prompting the customer to re-register the item, but may be a phrase indicating that the numbers of items do not match (in other words, a screen prompting the customer to re-register the item), or a phrase suggesting to the customer to call a store employee, for example. Furthermore, the alert may include a command (control information) instructing the POS device 5 to temporarily stop the function of the item registration and/or settlement process.

Additionally, the server 4A or 4B may output to a terminal used by the operator or administrator of the system 1 or the like, intermediate data in the process for outputting the image group 41d, such as information on the Gaussian distribution GD or an identified over-detection or under-detection, as one example. Furthermore, the server 4A or 4B may output information indicating the grounds for identifying a target image, such as images (screens) illustrated in FIGS. 7, 11, 19, etc., as one example, to a terminal used by the operator or administrator of the system 1 or the like.

Furthermore, the second example has been described where the server 4B determines consistency between images in the time duration from time T to T+1, but the server 4B is not limited to this and the server 4B may determine consistency between images in a time duration from the times T to T+n (where n is an integer of 1 or greater) .

Additionally, the second example has been described where the processing unit 48 performs three types of processing on the images, but this is not limiting, and other various processing (data augmentation) methods may be used alternatively or additionally.

Furthermore, for example, at least one of the server 4A and 4B and the fraud detection apparatus 3 may be configured such that a plurality of apparatuses cooperate with each other via a network to embody each processing function. As one example, the controller 40A or 40B in the server 4A or 4B may be embodied by an application server or Web server, and the storage area for storing the object detection model 41a and the videos 41b and 41c may be embodied by a DB (database) server. Additionally, the controller 30 in the fraud detection apparatus 3 may be embodied by an application server or Web server, and the storage area for storing the object detection model 31a and the video 31b may be embodied by a DB server. In such cases, the Web server, the application server, and the DB server may cooperate with each other via a network to embody the processing functions of at least one of the server 4A and 4B and the fraud detection apparatus 3.

### [Reference Signs List]

1 System
10 Computer
2 Camera
3 Fraud detection apparatus
30, 40, 40A, 40B Controller
31a, 41a Object detection model
31b, 41b, 41c Video
32 Inference unit
33 Determination unit
34 Output unit
35 Object detection unit
4, 4A, 4B Server
42, 42' Region center obtainment unit
43 Distribution estimation unit
44, 44' Appearance probability calculation unit
45, 45' Image group identification unit
46 Annotation provision unit
47 Training unit
48 Processing unit
49 Score calculation unit
5 POS device

## Claims

1. A fraud detection program that causes a computer to execute a process comprising:
obtaining an object detection result obtained by inputting a detection target image group (31b) including a self-checkout apparatus (5) in an imaging range, into an object detection model (41a) trained using training data, the training data including a target image and an annotation indicating an object included in the target image, the target image being identified by an identifying process comprising
calculating statistical information of a position of a detection region of an object in each image in a first image group (41b) based on positions of detection regions obtained by inputting the first image group (41b) into an object detection model (41a);
obtaining a position of a detection region of the object in each image in a second image group (41c) by inputting the second image group (41c) into the object detection model (41a); and
identifying a target image in which a detection region having an appearance probability equal to or less than a threshold is present, from a plurality of images included in the second image group (41c), based on the statistical information, the target image being to be added to training data used for training the object detection model (41a), and
performing fraud detection at the self-checkout apparatus (5) based on information about an item registered to the self-checkout apparatus (5) and the object detection result.

2. The fraud detection program according to claim 1, wherein
the identifying process comprising
obtaining a position of a detection region of the object in each image in a third image group by inputting the third image group into the object detection model (41a), the third image group being obtained by processing the respective plurality of images included in the second image group (41c), and
the identifying of the target image comprises identifying the target image based on a matching result of positions of detection regions of the object in images before and after the processing between the second image group (41c) and the third image group, and the statistical information.

3. The fraud detection program according to claim 2, wherein
the identifying of the target image comprises identifying the target image based on the matching result and an appearance probability of a position of the detection region based on the statistical information of the position of the detection region in an image in which the matching result is obtained.

4. The fraud detection program according to any one of claims 1 to 3, wherein
the identifying of the target image comprises identifying the target image based on a matching result of positions of detection regions of the object between temporally successive images in the second image group (41c), and the statistical information.

5. An information processing apparatus comprising a controller (40), the controller (40) being configured to execute a process comprising:
calculating statistical information of a position of a detection region of an object in each image in a first image group (41b) based on positions of detection regions obtained by inputting the first image group (41b) into an object detection model (41a);
obtaining a position of a detection region of the object in each image in a second image group (41c) by inputting the second image group (41c) into the object detection model (41a); and
identifying a target image in which a detection region having an appearance probability equal to or less than a threshold is present, from a plurality of images included in the second image group (41c), based on the statistical information, the target image being to be added to training data used for training the object detection model (41a).

6. The information processing apparatus according to claim 5, wherein
the controller (40) is configured to execute a process comprising:
obtaining a position of a detection region of the object in each image in a third image group by inputting the third image group into the object detection model (41a), the third image group being obtained by processing the respective plurality of images included in the second image group (41c), and
in the identifying of the target image, the controller (40) is configured to execute a process comprising identifying the target image based on a matching result of positions of detection regions of the object in images before and after the processing between the second image group (41c) and the third image group, and the statistical information.

7. The information processing apparatus according to claim 6, wherein
in the identifying of the target image, the controller (40) is configured to execute a process comprising identifying the target image based on matching result and an appearance probability of a position of the detection region based on the statistical information of the position of the detection region in an image in which the matching result is obtained.

8. The information processing apparatus according to any one of claims 5 to 7, wherein
in the identifying of the target image, the controller (40) is configured to execute a process comprising identifying the target image based on a matching result of positions of detection regions of the object between temporally successive images in the second image group (41c), and the statistical information.

9. The information processing apparatus according to any one of claims 5 to 8, wherein
the controller (40) is configured to execute a process comprising performing a machine learning process of an object detection model (41a) by using training data, the training data including the target image and an annotation indicating an object included in the target image.

10. The information processing apparatus according to claim 9, wherein
the controller (40) is configured to execute a process comprising
obtaining an object detection result obtained by inputting a detection target image group (31b) including a self-checkout apparatus (5) in an imaging range, into the object detection model (41a) trained using the training data, and
performing fraud detection at the self-checkout apparatus (5) based on information about an item registered to the self-checkout apparatus (5) and the object detection result.

11. An information processing system comprising:
a self-checkout apparatus (5);
a fraud detection apparatus (3) configured to perform fraud detection at the self-checkout apparatus (5) using an object detection model (41a); and
a controller (40), wherein
the controller (40) is configured to execute a process comprising:
calculating statistical information of a position of a detection region of an object in each image in a first image group (41b) based on the position of the detection region obtained by inputting the first image group (41b) into the object detection model (41a);
obtaining a position of a detection region of the object in each image in a second image group (41c) by inputting the second image group (41c) into the object detection model (41a); and
identifying a target image in which a detection region having an appearance probability equal to or less than a threshold is present, from a plurality of images included in the second image group (41c), based on the statistical information, the target image being to be added to training data used for training the object detection model (41a), and
the fraud detection apparatus (3) is configured to perform the fraud detection using the object detection model (41a) trained with training data, the training data including the target image and an annotation indicating the object included in the target image.

12. The information processing system according to claim 11, wherein
the controller (40) is configured to execute a process comprising:
obtaining a position of a detection region of the object in each image in a third image group by inputting the third image group into the object detection model (41a), the third image group being obtained by processing the respective plurality of images included in the second image group (41c), and
in the identifying of the target image, the controller (40) is configured to execute a process comprising identifying the target image based on a matching result of positions of detection regions of the object in images before and after the processing between the second image group (41c) and the third image group, and the statistical information.

13. The information processing system according to claim 12, wherein
in the identifying of the target image, the controller (40) is configured to execute a process comprising identifying the target image based on matching result and an appearance probability of a position of the detection region based on the statistical information of the position of the detection region in an image in which the matching result is obtained.

14. The information processing system according to any one of claims 11 to 13, wherein
in the identifying of the target image, the controller (40) is configured to execute a process comprising identifying the target image based on a matching result of positions of detection regions of the object between temporally successive images in the second image group (41c), and the statistical information.
